(19) Europäisches Patentamt
European Patent Office
Office européen des brevets

(11) **EP 4 742 706 A1**

(12) **EUROPEAN PATENT APPLICATION**
published in accordance with Art. 153(4) EPC

(43) Date of publication:
**13.05.2026 Bulletin 2026/20**

(21) Application number: **24836283.2**

(22) Date of filing: **02.07.2024**

(51) International Patent Classification (IPC):
**H04W 4/40** (2018.01)    **H04W 56/00** (2009.01)
**H04W 88/06** (2009.01)    **H04W 92/10** (2009.01)
**H04W 92/18** (2009.01)

(52) Cooperative Patent Classification (CPC):
**H04W 4/40; H04W 56/00; H04W 88/06;
H04W 92/10; H04W 92/18**

(86) International application number:
**PCT/KR2024/009260**

(87) International publication number:
**WO 2025/009835 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 KR 20230086497**

(71) Applicant: **LG Electronics Inc.**
**Yeongdeungpo-gu**
**Seoul 07336 (KR)**

(72) Inventors:
• **HWANG, Jaeho**
  **Seoul 06772 (KR)**
• **SEO, Hanbyul**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING MESSAGE BY TERMINAL IN WIRELESS COMMUNICATION SYSTEM**

(57)    Disclosed are a method and an apparatus for transmitting a message by a first terminal in a wireless communication system according to various embodiments. Disclosed are a method and an apparatus therefor, the method comprising the steps of: periodically transmitting a first message including first mobility information to a second terminal via a first link for direct device-to-device communication; periodically transmitting a second message including second mobility information to the second terminal via a second link for communication with a network; and receiving, from the second terminal, information on a reception time difference between the first message and the second message.

FIG. 16

**Description**

## TECHNICAL FIELD

The present disclosure relates to a method for a User Equipment (UE) to periodically transmit two or more messages in a wireless communication system, and an apparatus therefor.

## BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

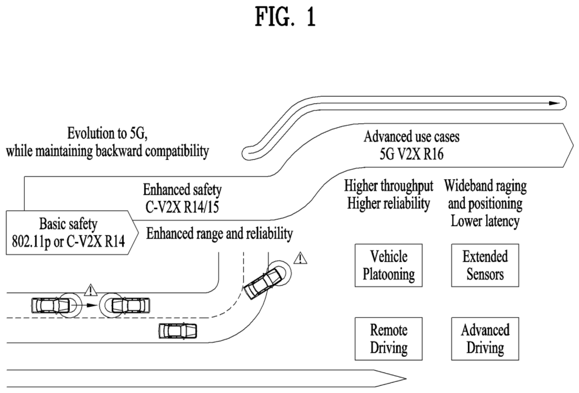

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

The object of the present disclosure is to provide a method for a User Equipment (UE) to efficiently transmit a message in a wireless communication system, and an apparatus therefor.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of transmitting a message by a first User Equipment (UE) in a wireless communication system. The method includes: periodically transmitting a first message including first mobility information to a second UE through a first link for direct communication between UEs; periodically transmitting a second message including second mobility information to the second UE through a second link for communication with a network; and receiving information on a reception time difference between the first message and the second message from the second UE. A transmission time of the second message is adjusted based on the reception time difference exceeding a specific value.

Alternatively, the transmission time of the second message is adjusted to be separated by an offset time from a transmission time of the first message, and the offset time is determined based on the reception time difference.

Alternatively, the first UE calculates a difference between reception delays of the first message and the second message based on the reception time difference, and the first UE determines the offset time based on the calculated difference.

Alternatively, the offset time is determined as a value obtained by subtracting the difference from a transmission period of the first message.

Alternatively, the specific value is 0.

Alternatively, the specific value is determined based on a time resource length of the second message.

Alternatively, the information on the reception time difference is received based on the reception time difference exceeding the specific value.

In another aspect of the present disclosure, provided herein is a computer-readable recording medium having recorded thereon a program for executing the above-described message transmission method.

In another aspect of the present disclosure, provided herein is a first UE configured to perform the above-described message transmission method.

In another aspect of the present disclosure, provided herein is a processing device configured to control a first UE that performs the above-described message transmission method.

In another aspect of the present disclosure, provided herein is a method of receiving a message by a second UE in a wireless communication system. The method includes: periodically receiving a first message including first mobility information from a first UE through a first link for direct communication between UEs; periodically receiving a second message of the first UE including second mobility information through a second link connected to a network; and calculating a reception time difference between the first message and the second message. The reception time difference may be reported to the first UE to request adjustment of a transmission time of the second message.

Alternatively, the second UE calculates dynamics of the first UE based on a difference between the first mobility information and the second mobility information.

In another aspect of the present disclosure, provided herein is a computer-readable recording medium having recorded thereon a program for executing the above-described message reception method.

In another aspect of the present disclosure, provided herein is a second UE configured to perform the above-described message reception method.

In a further aspect of the present disclosure, provided herein is a processing device configured to control a second UE that performs the above-described message reception method.

## ADVANTAGEOUS EFFECTS

According to an embodiment, a User Equipment (UE) may accurately and efficiently transmit and receive a message in a wireless communication system.

Effects obtainable from various embodiments are not limited to the effects described above, and other effects not mentioned above may be clearly understood from the description below by a person having ordinary knowledge in a technical field of the present disclosure.

## BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.

FIG. 1 is a diagram for explaining by comparing V2X communication based on RAT before NR and V2X communication based on NR.

FIG. 2 illustrates the structure of an LTE system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 shows a communication structure providable in a 6G system, based on an embodiment of the present disclosure.

FIG. 7 shows an electromagnetic spectrum, based on an embodiment of the present disclosure.

FIG. 8 shows an example of an NTN typical scenario based on a transparent payload, based on an embodiment of the present disclosure.

FIG. 9 shows an example of an NTN typical scenario based on a regenerative payload, based on an embodiment of the present disclosure.

FIG. 10 shows an example of a sensing operation, based on an embodiment of the present disclosure.

FIG. 11 illustrates a radio protocol architecture for SL communication.

FIG. 12 illustrates UEs performing V2X or SL communication.

FIG. 13 illustrates resource units for V2X or SL communication.

FIG. 14 shows an example of a BWP, based on an embodiment of the present disclosure.

FIG. 15 shows a procedure of performing V2X or SL communication by a UE based on a resource allocation mode, based on an embodiment of the present disclosure.

FIGS. 16 and 17 are diagrams for explaining a message operation scheme of a hybrid UE.

FIG. 18 is a block diagram briefly illustrating a configuration of a hybrid UE, and FIG. 19 is a diagram for explaining a method of transmitting and receiving messages between hybrid UEs.

FIG. 20 is a diagram for explaining a method in which a transmitting UE and a receiving UE exchange information on reception delays.

FIG. 21 is a diagram for explaining a method in which a receiving UE calculates dynamics of a transmitting UE.

FIG. 22 is a diagram for explaining a method in which a first UE transmits a first message corresponding to a V2X message and a second message corresponding to a V2N message.

FIG. 23 is a diagram for explaining a method in which a second UE receives a first message corresponding to a V2X message and a second message corresponding to a V2N message.

FIG. 24 illustrates a communication system applied to the present disclosure.

FIG. 25 illustrates wireless devices applicable to the present disclosure.

FIG. 26 illustrates another example of a wireless device to which the present disclosure is applied.

FIG. 27 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

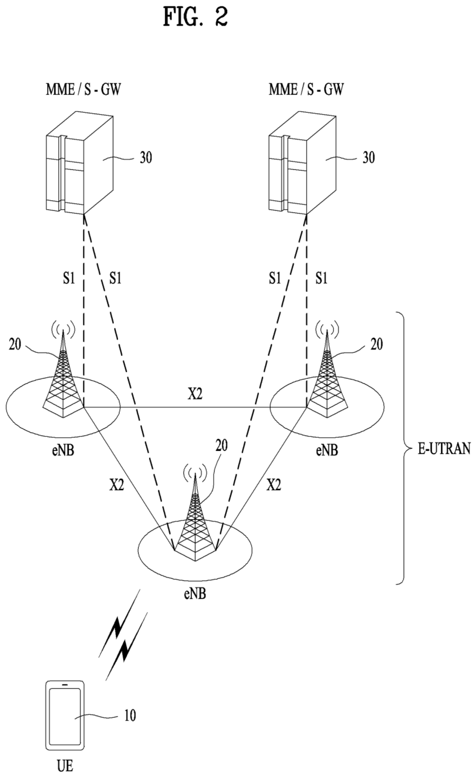

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

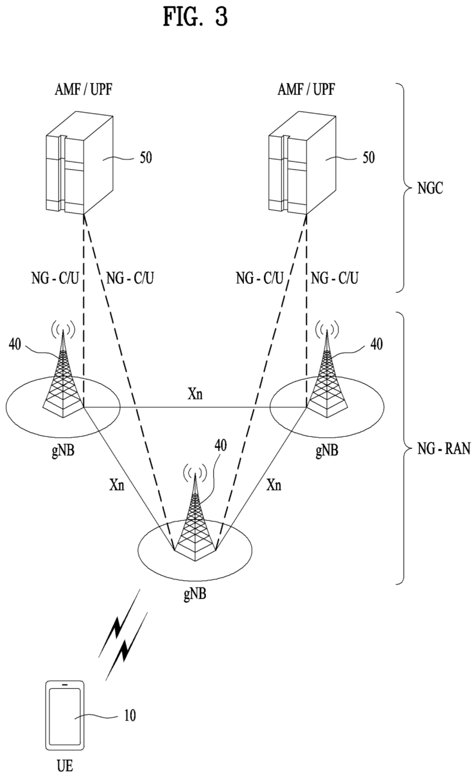

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

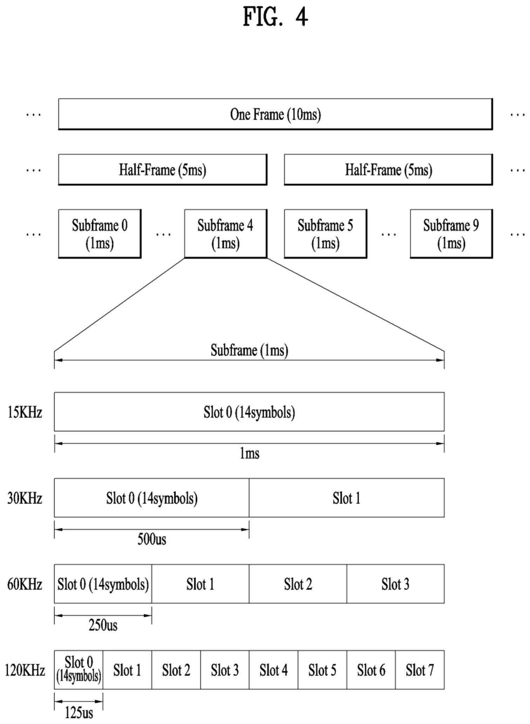

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

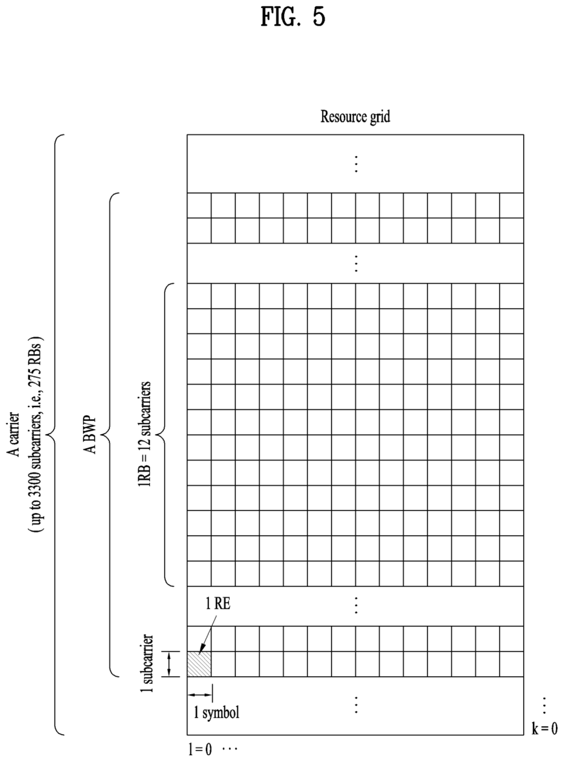

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

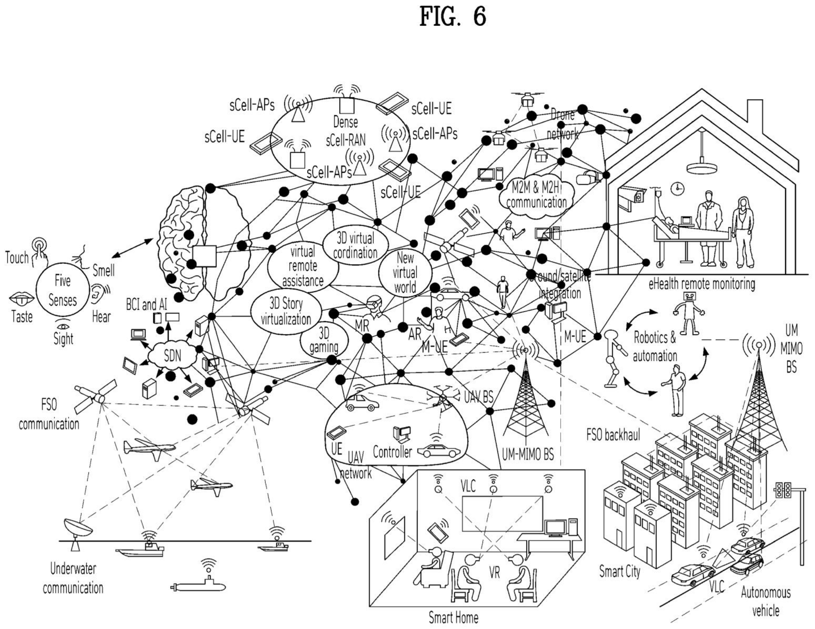

FIG. 6 shows a communication structure providable in a 6G system, based on an embodiment of the present disclosure. The embodiment of FIG. 6 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.

- Softwarization and virtualization

Core implementation technology of 6G system is described below.

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

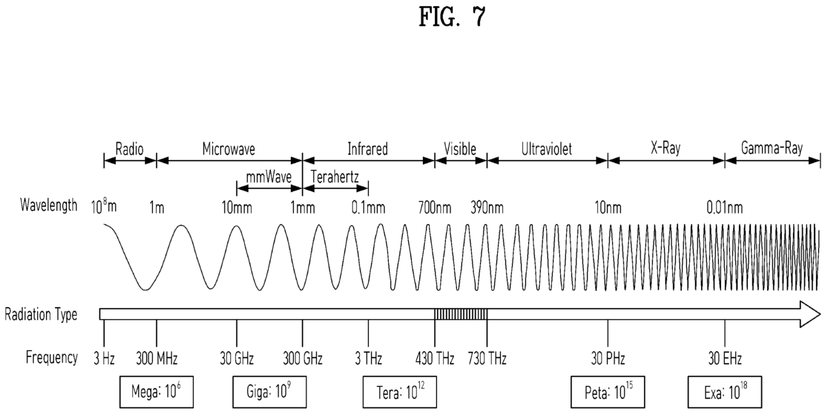

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

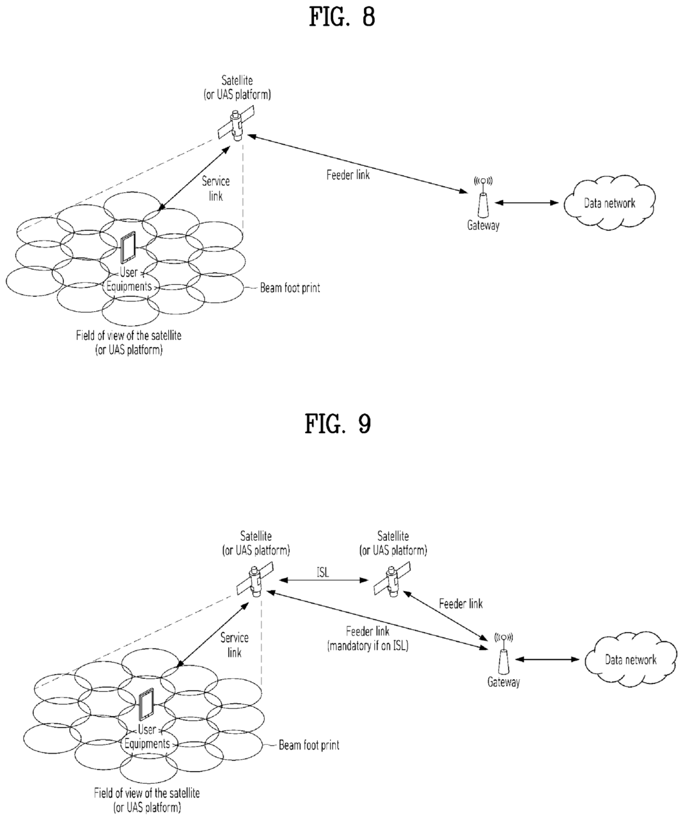

- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

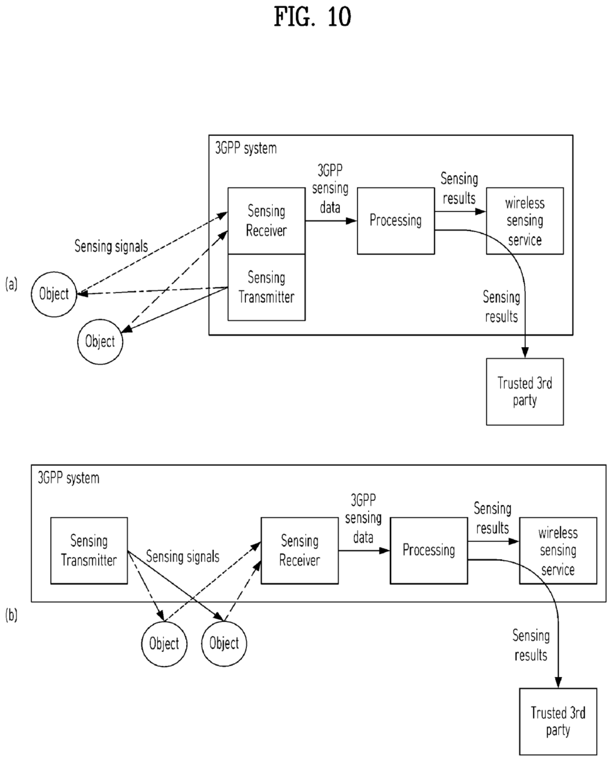

- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

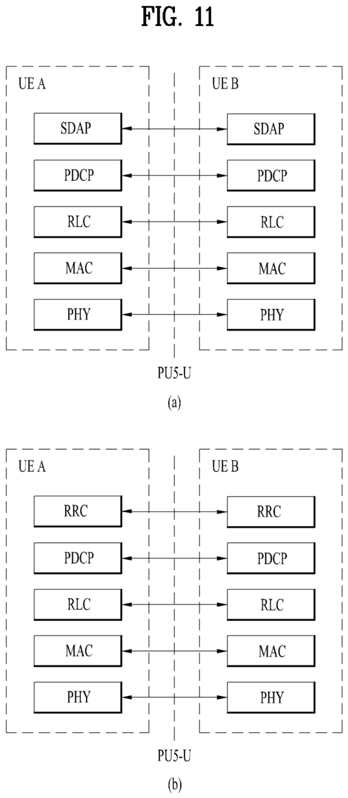

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

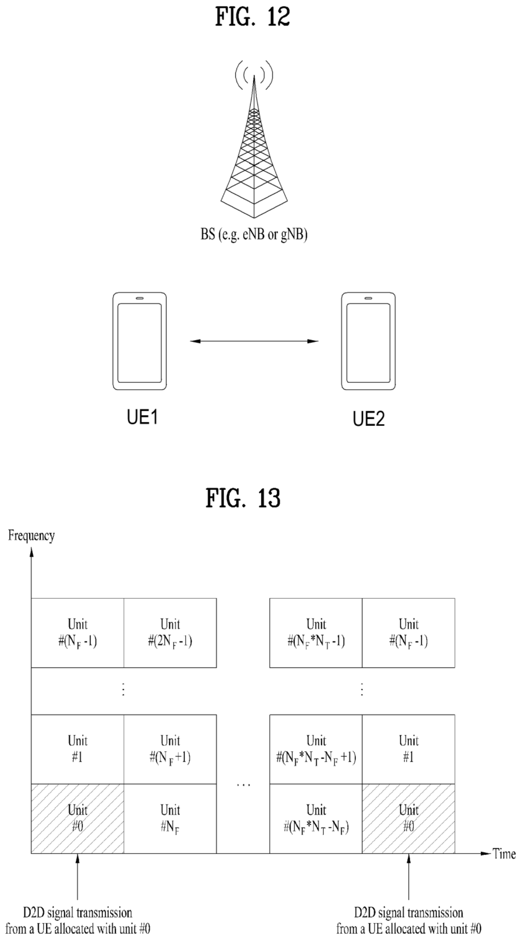

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

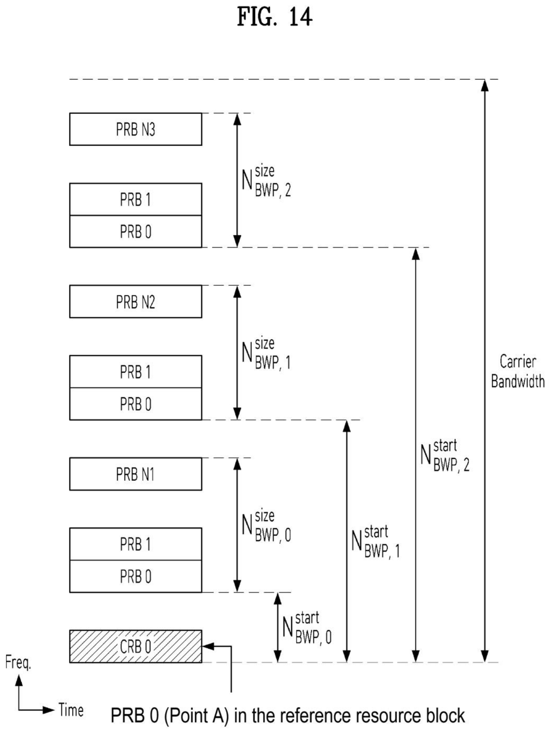

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

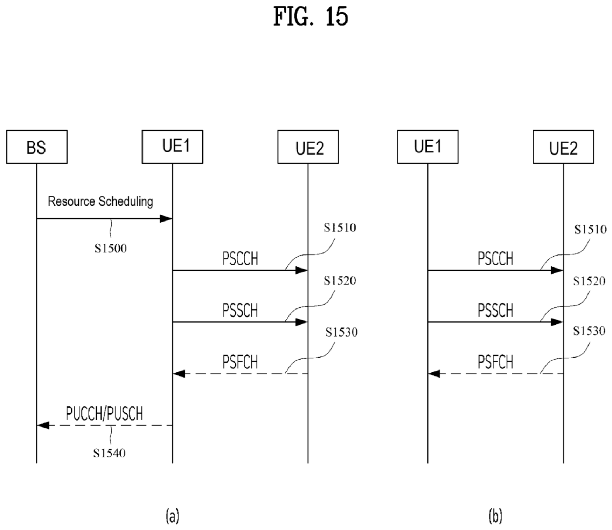

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

**Dynamics acquisition method through simultaneous reception of hybrid Vehicle-to-Everything (V2X) UE**

For V2X, V2X technology (for example, PC5 and Dedicated Short Range Communications (DSRC)) based on direct communication (short-range communication) and Vehicle-to-Network (V2N) technology that utilizes a Uu interface of a network (long-range communication or cellular communication) are being developed in a mixed manner. In particular, technology development is being discussed such that a UE is capable of supporting both a V2X service based on direct communication and a V2N service based on a Uu interface. However, at the current stage, a UE supports the two services without any interworking between the two services. That is, a UE supporting the two services transmits a V2X message and a V2N message according to independent message-operation methods of the services. In this case, a receiving UE may be unable to efficiently utilize messages for the two services, and consistency of service provision may be degraded.

Hereinafter, a method of interworking a message operation scheme between V2X technology in which direct communication between UEs (for example, through a 5.9 GHz band) is performed and V2N technology utilizing an existing network is described in detail in consideration of such problems. In particular, a method of significantly increasing usefulness of message operation in a hybrid UE (hybrid device) supporting both technologies through interworking of the message operation scheme between the two technologies is described in detail.

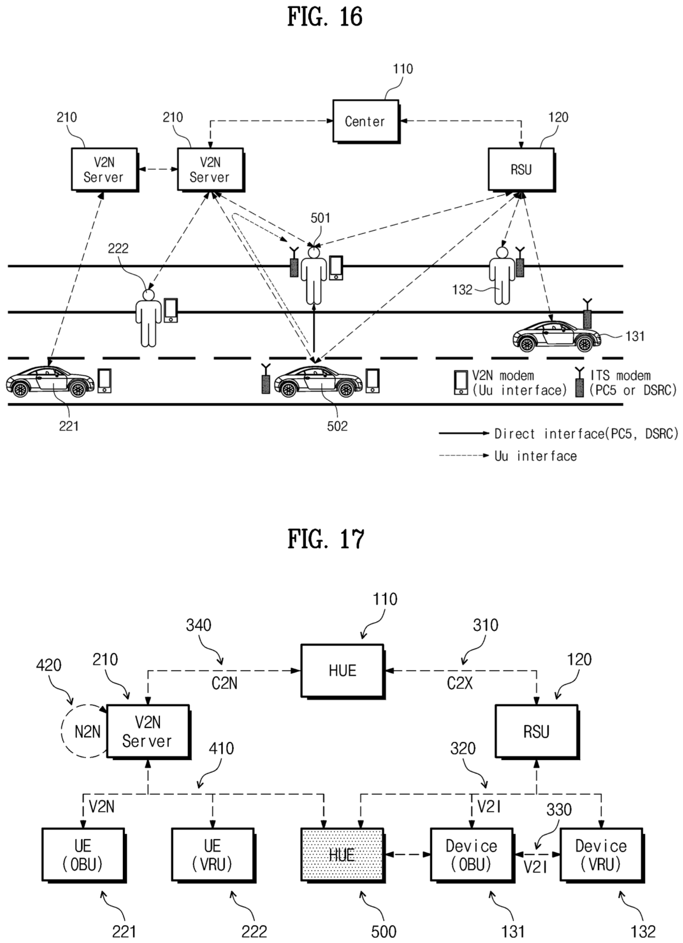

FIGS. 16 and 17 are diagrams for explaining a message operation scheme of a hybrid UE.

Referring to FIG. 16, a hybrid UE 502 may transmit a V2X message for providing a V2X service to a surrounding device 501 based on a direct-communication technology (PC5 and DSRC). The hybrid UE 502 may also transmit a V2N message related to the V2X service to the surrounding device 501 through a V2N server 210 based on a conventional cellular network. The hybrid UE 502 may transmit both the V2X message and the V2N message. In this case, when the surrounding device 501 is also a hybrid UE, the surrounding device 501 receives both the V2X message and the V2N message including redundant information (for example, mobility information).

Referring to FIG. 17, an On Board Unit (OBU) 131 installed in a vehicle and a Vulnerable Road User (VRU) device 132 installed in a traffic-vulnerable entity such as a pedestrian exchange V2X messages through direct communication (DSRC or PC5) using a conventional 5.9 GHz band. An RSU 120 located around a road may transmit Signal Phase and Timing (SPaT) and MAP signals through short-range communication 320 or collect information of UEs such as Probe Vehicle Data (PVD). In addition, an OBU 221 and a VRU 222 that do not support direct communication may exchange messages through a V2N server 210 through a Uu interface 410. The Uu interface 410 may be a cellular network (or mobile communication network) with a conventional BS.

A hybrid UE (HUE) 500 is not only capable of performing direct communication or short-range communication between UEs, but may also exchange a V2N message through the V2N server 210 through a Uu interface (for example, a cellular network or long-range communication).

Hereinafter, a technology for securing safety of a user by increasing usefulness of messages redundantly transmitted and received between hybrid UEs having both a direct communication (or short-range communication) modem and a Uu interface (or long-range communication) modem is described in detail. Here, the direct communication modem and the long-range communication modem have different latency, and thus a difference between a transmission time and a reception time of a message (or an average of differences) may be different. In consideration of this, a transmitting UE may adjust a transmission time of a V2X message or a V2N message such that a receiving UE is capable of receiving the V2N message and the V2X message simultaneously. In this case, the receiving UE may receive and process the two messages within the same period and reduce burden caused by signal processing of the two messages. The receiving UE may also effectively acquire dynamic information of the transmitting UE by effectively calculating a change in position of the transmitting UE over a short time based on a difference in mobility information included in the two messages that are simultaneously received (or received within a predetermined time). Even when information such as speed or acceleration is not included in the two messages, the receiving UE may rapidly acquire or generate actual speed and acceleration of the transmitting UE (i.e., additional information of the transmitting UE) based on the change in position of the transmitting UE within the short time.

Hereinafter, a configuration of a hybrid UE capable of performing the above-described methods (transmission timing adjustment, calculation/acquisition of dynamic information, etc.) is described in detail.

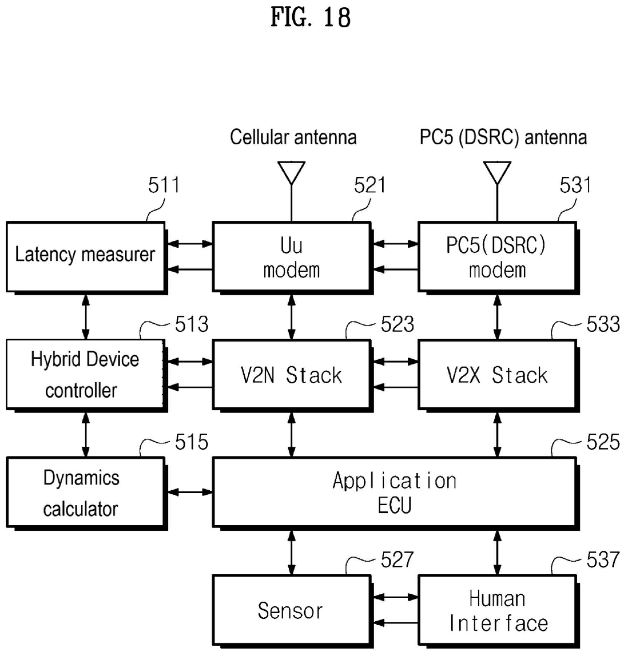

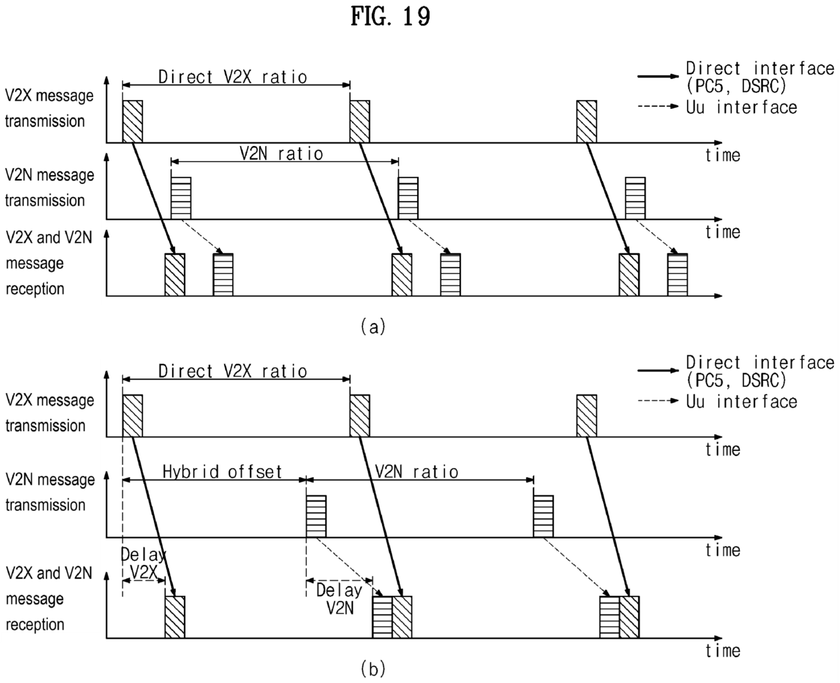

FIG. 18 is a block diagram briefly illustrating a configuration of a hybrid UE, and FIG. 19 is a diagram for explaining a method of transmitting and receiving a message between hybrid UEs.

Referring to FIG. 18, the hybrid UE may include a cellular antenna capable of long-range communication (or cellular communication) and a PC5 (or DSRC) antenna capable of direct communication through a 5.9 GHz band. A signal received through the cellular antenna may be processed through a Uu modem 521, and a signal received through the PC5 (or DSRC) antenna may be processed through a PC5 (or DSRC) modem 531. In addition, the hybrid UE may process Network & Transport layer operations and Facility layer operations in a V2N stack 523 connected to the Uu modem 521 and a V2X stack 533 connected to the PC5 (or DSRC) modem 531.

The hybrid UE may further include: a latency measurer 511 connected to the Uu modem 521 and the PC5 modem 531 and configured to measure reception times of a V2N message and a V2X message and calculate a delay value; a hybrid UE controller 513 connected to the V2N stack 523 and the V2X stack 533 and configured to adjust transmission times of a V2N message and/or a V2X message; and a dynamic calculation block 515 configured to compare a V2N message and a V2X message and calculate dynamics.

A transmitting hybrid UE (hereinafter, a transmitting UE) may periodically transmit a V2X message and a V2N message based on the Uu modem 521 and the PC5 modem 531, respectively. For example, the transmitting UE may periodically transmit a V2X message at a direct V2X period (direct V2X ratio) and may periodically transmit a V2N message at a V2N period (V2N ratio).

Specifically, referring to FIG. 19(a), when there is no interworking between the Uu modem 521 and the PC5 modem 531, the transmitting UE may independently generate and transmit the V2N message and the V2X message. In this case, a receiving hybrid UE (hereinafter, a receiving UE) may receive the V2X message and subsequently receive the V2N message at a certain time interval. Since the receiving UE receives the V2X message and the V2N message separately, burden of message processing may increase. In addition, since the receiving UE needs to receive the V2X message and subsequently receive the V2N message at a certain time interval to calculate the above-described dynamics, unnecessary delay may occur in calculating information such as speed or acceleration of the transmitting UE, and unified processing of messages may be difficult. That is, the receiving UE may have difficulty effectively fusing and processing the received V2N message and V2X message.

Therefore, to increase usefulness of the V2X message and the V2N message and to effectively fuse the V2X message and the V2N message, the transmitting UE needs to interwork the Uu modem 521 and the PC5 modem 531 and transmit the V2N message and the V2X message. In general, since short-range communication (PC5-based direct communication) may have shorter latency than long-range communication (Uu-interface-based communication), a transmitting UE may adjust transmission times of a V2N message and/or V2X message to be periodically transmitted by considering both latency values of direct communication and long-range communication.

Specifically, referring to FIG. 19(b), a transmitting UE may sequentially transmit a V2N message and a V2X message at an interval of a hybrid offset (or offset time). The hybrid offset may be set or determined based on a reception delay difference, which is a difference between reception delays of a V2X message and a V2N message at a receiving UE. For example, the transmitting UE may configure the hybrid offset by considering the delays such that the receiving UE is capable of receiving the V2N message continuously with or simultaneously with the V2X message. As illustrated in FIG. 19(b), the transmitting UE may determine or configure the hybrid offset such that the receiving UE is capable of receiving the V2X message and the V2N simultaneously or consecutively by considering the delay values. For example, the V2X message and the V2N message may be transmitted at a period T1, a delay k may occur when the V2X message is received at the receiving UE, and a delay m (m > k) may occur when the V2N message is received. In this case, to allow the V2X message and the V2N message to be simultaneously received at the receiving UE, the hybrid offset may be determined as T1 - (m - k). Alternatively, to allow the V2X message and the V2N message to be consecutively received at the receiving UE, the hybrid offset (x) may be determined based on T1 - (m - k) - a. For example, the hybrid offset (x) may be determined as any value greater than T1 - (m - k) - a and less than T1 - (m - k). Here, a may be a transmission time length of the V2N message or a length of a transmission time resource. When the hybrid offset is configured as described above, the receiving UE may configure an optimized application capable of simultaneously utilizing the V2X message and the V2N message.

Hereinafter, a method of transmitting and receiving information on a reception delay between a receiving UE and a transmitting UE to allow the receiving UE to receive two messages simultaneously or consecutively is described.

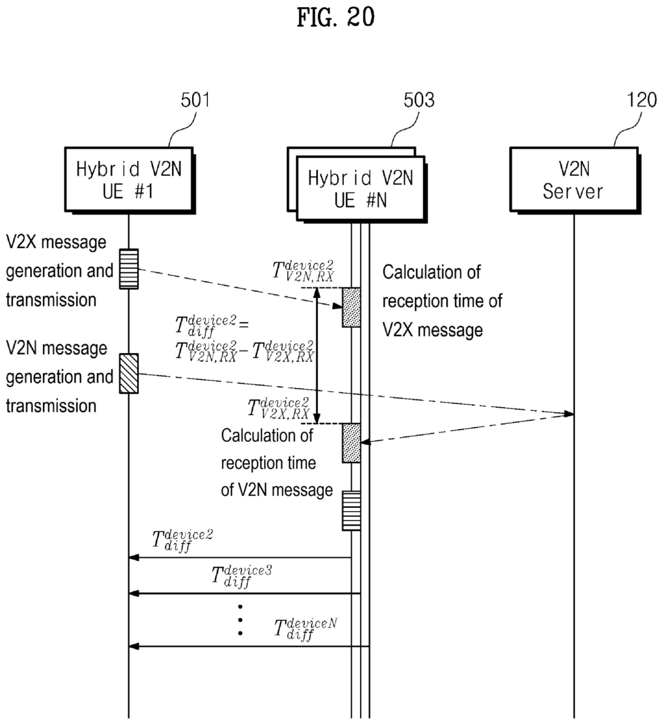

FIG. 20 is a diagram for explaining a method in which a transmitting UE and a receiving UE exchange information on reception delays.

The transmitting UE and the receiving UE may calculate the reception delay (or the average of reception delays) such that the receiving UE is capable of receiving two messages simultaneously or consecutively in a time domain, and may exchange information thereon.

Specifically, the receiving UE may measure a reception time difference between V2X and V2N messages through exchange of the V2X and V2N messages. The receiving UE may transmit information on the measured reception time difference to the transmitting UE. The transmitting UE may adjust a transmission time of a V2N message (or a V2X message) such that the receiving UE is capable of receiving the V2N message and the V2X message simultaneously or consecutively based on the received reception time difference.

In this case, a plurality of receiving UEs (UE#2 to UE#N) may exist. Each of the receiving UEs (UE#2 to UE#N) may calculate reception time differences between the V2X message and V2N message ( $T_{diff}^{UE\#2}, ..., T_{diff}^{UE\#N}$ ). The receiving UEs may transmit the calculated reception time differences to the transmitting UE (UE#1). In this case, the transmitting UE (UE#1) may set or determine a time offset value ( $T_{offset}^{UE\#1}$ ), which is a transmission time difference between the V2X message and the V2N message, as an average value of the reception time differences (or a value obtained by subtracting the average value from a V2N transmission period (T) (or the V2X transmission period (T))) as shown in Equation 1 below.

[Equation 1]

$$T_{offset}^{UE\#1} = \text{mean}(T_{diff}^{UE\#2}, T_{diff}^{dUE\#3}, \dots, T_{diff}^{UE\#N}) \text{ or}$$

$$T_{offset}^{UE\#1} = T - \text{mean}(T_{diff}^{UE\#2}, T_{diff}^{dUE\#3}, \dots, T_{diff}^{UE\#N})$$

Alternatively, the transmitting UE (UE#1) may additionally apply an extra time gap ( $T_{gap}^{dynamics}$ ) as shown in Equation 2 below such that the receiving UEs (UE#2 to UE#N) may effectively calculate dynamics of the transmitting UE. Meanwhile, the additional time gap may be determined as a value within a range in which the receiving UEs may receive the V2X message and the V2N message consecutively.

[Equation 2]

$$T_{offset}^{UE\#1} = \text{mean}(T_{diff}^{UE\#2}, T_{diff}^{dUE\#3}, \dots, T_{diff}^{UE\#N}) + T_{gap}^{dynamics}$$

As described above, the transmitting UE may interwork and adjust the transmission times of the V2N message and the V2X message such that the receiving UEs are capable of receiving the V2X message and the V2N message simultaneously or consecutively.

Hereinafter, a method of calculating dynamics of a transmitting UE based on a V2X message and a V2N message for which transmission times have been adjusted as described above is described in detail.

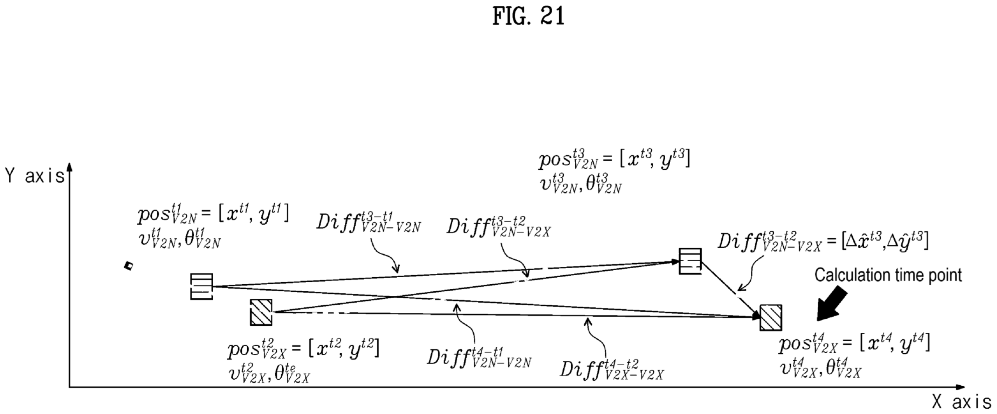

FIG. 21 is a diagram for explaining a method in which a receiving UE calculates dynamics of a transmitting UE.

The receiving UE may measure or calculate dynamics of the transmitting UE based on mobility information included in each of V2X and V2N messages that are received with a predetermined time difference.

Specifically, referring to FIG. 21, the receiving UE may receive position information (or coordinate information) of the transmitting UE through a V2X message and a V2N message. In this case, as described above, the two messages may be simultaneously or consecutively received at the receiving UE through adjustment of transmission times. The V2N message may be generated at t1 (and/or include position information of the transmitting UE at t1), and the V2X message may be generated at t2 (and/or include position information of the transmitting UE at t2). The receiving UE may simultaneously or consecutively receive the V2N message generated/transmitted at t1 and the V2X message generated/transmitted at t2. As described above, since different delays occur between the V2N message and the V2X message, t1 and t2 may be different times. Thereafter, the receiving UE may receive the V2N message and the V2X message transmitted in a next period. The V2N message may be generated and transmitted at t3, and the V2X message may be generated and transmitted at t4. In this case as well, the receiving UE may simultaneously or consecutively receive the V2N message generated/transmitted at t3 and the V2X message generated/transmitted at t4. The V2X message and the V2N message may include only a position value of the transmitting UE, or may further include information on speed, acceleration, and heading, as illustrated in FIG. 21. Hereinafter, a case is described in which at least one of information on speed, acceleration, and heading is not included in at least one of the V2X message and the V2N message.

Upon receiving the two messages through two channels (a short-range communication channel and a long-range communication channel), the receiving UE may calculate dynamics of the transmitting UE based on mobility information included in the two messages. The calculated dynamics may include position change, speed, acceleration (or change in speed), and change in heading of the transmitting UE. A position change may be calculated based on a difference between a position value ( $Pos_{V2N}^{t3}$ ) of the transmitting UE included in the V2N message at t3 and a position value ( $Pos_{V2X}^{t4}$ ) of the transmitting UE included in the V2X message at t4. Specifically, a position change ( $Pos_{diff}^{t4}$ ) may be calculated as shown in Equation 3 below.

[Equation 3]

$$Pos_{diff}^{t4} = [\Delta x, \Delta y] = [x_{V2X}^{t4} - x_{V2N}^{t3}, y_{V2X}^{t4} - y_{V2N}^{t3}] \text{ or}$$

$$Pos_{diff}^{t4} = [\Delta x, \Delta y, \Delta z] = [x_{V2X}^{t4} - x_{V2N}^{t3}, y_{V2X}^{t4} - y_{V2N}^{t3}, z_{V2X}^{t4} - z_{V2N}^{t3}]$$

A speed of the transmitting UE (for example, a speed of the transmitting UE at t4, $v^{t4}$) may also be calculated as shown in Equation 4 by comparing the V2N message and the V2X message generated at t3 and t4.

[Equation 4]

$$v^{t4} = \frac{|Pos_{diff}^{t4}|}{t4 - t3}$$

An acceleration of the transmitting UE (for example, an acceleration of the transmitting UE at t4, $a^{t4}$) may also be calculated as shown in Equation 5 by comparing the V2N message and the V2X message generated at t3 and t4.

[Equation 5]

$$a^{t4} = \frac{v^{t4} - v^{t3}}{t4 - t3}$$

A change in heading of the transmitting UE may be calculated based on heading included in each of the V2N and V2X messages. Referring to FIG. 21, a change in heading ($\theta^{t1,t2}$) of the transmitting UE between t1 and t2 may be acquired through a difference between heading information ($\theta_{V2N}^{t1}$) included in the V2N message and heading information ($\theta_{V2X}^{t2}$) included in the V2X message. In addition, a change in heading ($\theta^{t3,t4}$) of the transmitting UE between t3 and t4 may be acquired through a difference between heading information ($\theta_{V2N}^{t3}$) included in the V2N message and heading information ($\theta_{V2X}^{t4}$) included in the V2X message. Accordingly, the receiving UE may easily calculate or acquire the dynamics of the transmitting UE over a short time (for example, a delay difference between the two messages) based on the two messages that are simultaneously received.

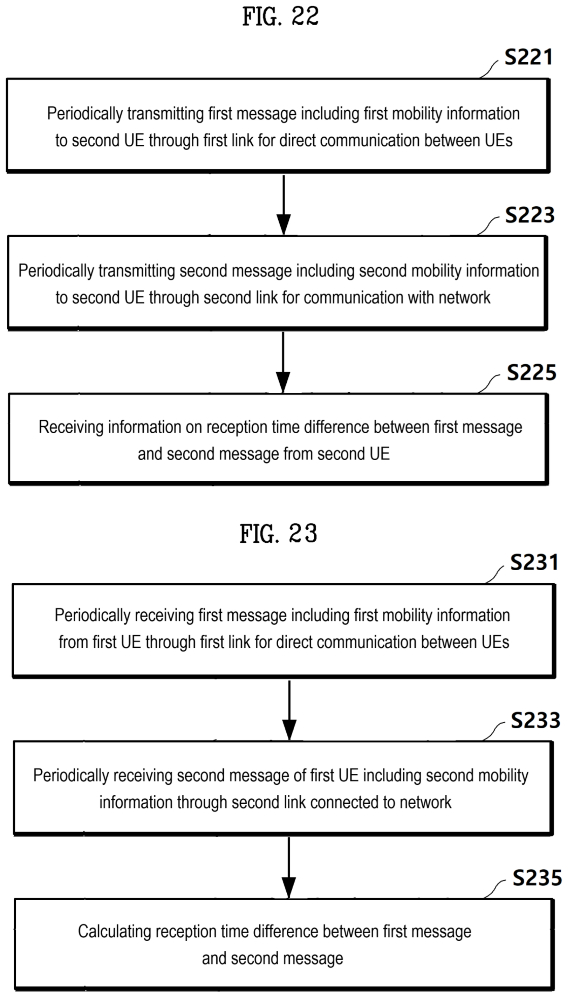

FIG. 22 is a diagram for explaining a method in which a first UE transmits a first message and a second message.

Referring to FIG. 22, the first UE may periodically transmit the first message including first mobility information to a second UE through a first link for direct communication between UEs (S221). As described above, the first link may be a link based on a PC5 interface capable of direct communication between UEs or a link based on DSRC. The first message may be a V2X message exchanged between UEs (or vehicles). Alternatively, the first message may be a message for a V2X service, such as a Basic Safety Message (BSM), a Common Awareness Message (CAM), a Collective Perception Message (CPM), a Personal Safety Message (PSM), or a Decentralized Environment Notification Message (DENM). The first mobility information may include at least one of movement speed, location, acceleration, and heading of the first UE at a generation time of the first message. For example, the first mobility information may be updated according to the generation time of the first message that is periodically generated. Here, as described above, the first UE may be a hybrid UE capable of transmitting not only a V2X message through the first link but also a V2N message through a second link, which is another communication modem or another communication system.

Next, the first UE may periodically transmit the second message including second mobility information to the second UE through the second link for communication with a network (S223). As described above, the second link may be a link for long-range communication based on a Uu interface and may be a link based on a cellular mobile communication network connected to the network. The second message may be a V2N message that provides mobility information of the first UE to surrounding UEs or surrounding vehicles through the network. The second mobility information may include at least one of movement speed, location, acceleration, and heading of the first UE at a generation time of the second message. For example, the second mobility information may be updated according to the generation time of the second message that is periodically generated. Alternatively, a period of the second message may be set as a default period that is identical to a period of the first message.

Next, the first UE may receive information on a reception time difference between the first message and the second message from the second UE (S225). Specifically, the second UE may calculate a reception time difference between a reception time of the first message and a reception time of the second message and may report information on the calculated reception time difference to the first UE. The reception time difference may be a difference between the reception time of the first message and the reception time of the second message received after reception of the first message. Even when the first message and the second message are received at the same second UE, a first reception delay until the first message is received at the second UE and a second reception delay until the second message is received at the second UE may be different. As described above, the first message is directly transmitted to the second UE through a direct link between UEs, whereas the second message is transmitted to the second UE through the network.

Upon receiving the information on the reception time difference, the first UE may adjust a transmission time of the periodically transmitted second message (for example, a transmission time of the second message transmitted in a next period after transmission of the second message used for calculating the reception time difference) such that the second UE is capable of receiving the first message and the second message simultaneously or consecutively in the time domain, as described above. Here, the first message that is received consecutively with or simultaneously with the second message may be the first message received after transmission of the second message (that is, the first message transmitted in a next period after the first message used for calculating the reception time difference). For example, the first UE may change or adjust the transmission time of the second message based on the reception time difference when the reception time difference exceeds a specific threshold value. On the other hand, when the reception time difference does not exceed the specific threshold value, the first UE may not change or adjust the transmission time of the second message. The specific threshold value may be 0, as described above. Alternatively, the specific threshold value may correspond to a length of a time resource required for transmitting the second message. Alternatively, the information on the reception time difference may be received from the second UE only when the reception time difference exceeds the specific threshold value.

When the first UE adjusts the transmission time of the second message, the first UE may determine an offset time based on the reception time difference and may adjust the transmission time of the periodically transmitted second message such that a transmission time of the first message and the transmission time of the second message have the offset time interval. Specifically, the first UE may calculate a difference between reception delays of the first message and the second message based on the reception time difference. For example, the first UE may calculate a delay difference between the first message and the second message by subtracting a difference between the transmission time of the first message and the transmission time of the second message from the reception time difference. The first UE may determine the offset time as a value obtained by subtracting the calculated delay difference from the transmission period of the second message (when a time interval between the first message and the subsequently transmitted second message is the offset time). Alternatively, the first UE may determine the delay difference as the offset time (when a time interval between the second message and the subsequently transmitted first message is the offset time). Alternatively, as described above, the first UE may determine whether to additionally apply a predetermined gap to the offset time based on a difference between the second mobility information included in the second message and the first mobility information included in the first message transmitted after the transmission of the second message. For example, when the specific threshold value is 0 and the difference between the first mobility information and the second mobility information is less than a specific difference, the first UE may additionally apply a gap corresponding to a length of the second message to the offset time. Here, the generation time of the second message may also be adjusted in correspondence with adjustment of the transmission time of the second message. That is, the generation time of the second message and the generation time of the first message also have a difference corresponding to the offset time.

FIG. 23 is a diagram for explaining a method in which a second UE receives a first message, which is a V2X message, and a second message, which is a V2N message.

Referring to FIG. 23, the second UE may periodically receive the first message including first mobility information from a first UE through a first link for direct communication between UEs (S231). Next, the second UE may periodically receive the second message including second mobility information from the first UE through a second link connected to a network (S233). The second UE may additionally calculate instantaneous dynamics of the first UE based on a difference between the first mobility information included in the first message and the second mobility information included in the second message. For example, the second UE may calculate or acquire dynamics of the first UE corresponding to the first mobility information and the second mobility information by using Equations 3 to 5 described above.

Next, the second UE may calculate a reception time difference between a reception time of the first message and a reception time of the second message (the second message received after the first message) based on the first message (S235).

The second UE may report information on the calculated reception time difference to the first UE. Alternatively, the second UE may report the reception time difference only when the reception time difference exceeds a specific threshold value. Here, the reporting of the reception time difference may be performed to request adjustment of a transmission time of the second message that is periodically transmitted by the first UE. For example, by reporting the reception time difference, the second UE may enable the first message and the second message to be periodically received simultaneously or consecutively in a time domain. Alternatively, even when the reception time difference is less than or equal to the specific threshold value, if the difference between the first mobility information and the second mobility information is less than a specific threshold difference, the second UE may have difficulty appropriately acquiring instantaneous dynamics of the first UE. In addition, even when the reception time difference is less than or equal to the specific threshold value, the second UE may report information on the reception time difference to the first UE. In this case, as described with reference to FIG. 22, the first UE may adjust the transmission time of the second message by additionally applying a predetermined gap.

As such, according to the present disclosure, a transmission time of a V2X message may be adjusted in consideration of a reception delay difference between the V2X message and a V2N message, thereby guaranteeing simultaneous or consecutive reception of the V2X message and the V2N message at a receiving UE. Alternatively, according to the present disclosure, by guaranteeing that a V2X message and a V2N message are received simultaneously or consecutively in a time domain at a receiving UE, time resources required for receiving the two messages at the receiving UE may be minimized, and decoding time of the two messages may be significantly reduced. Alternatively, according to the present disclosure, alignment of reception times between a V2X message and a V2N message may guarantee that a receiving UE is capable of calculating instantaneous dynamics of a transmitting UE based on the two messages.

**Communication system example to which the present disclosure is applied**

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

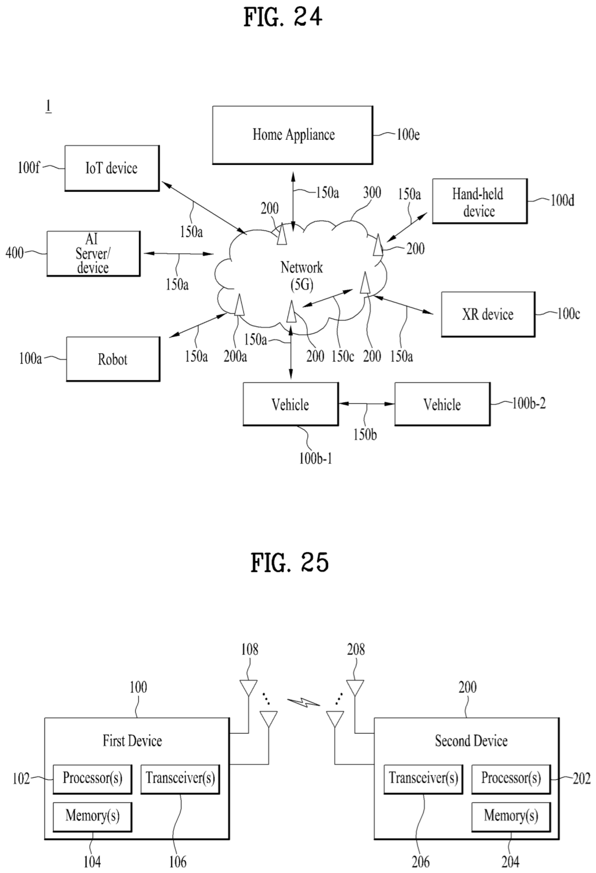

FIG. 24 illustrates a communication system applied to the present disclosure.

Referring to FIG. 24, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 25 illustrates a wireless device applicable to the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a first UE may include the processor(s) 102 connected to the transceiver(s) 106 and the memory(s) 104. The memory(s) 104 may include at least one program capable of performing operations related to the embodiments described with reference to FIGS. 16 to 23.

The processor(s) 102 may control the transceiver(s) 106 to: periodically transmit a first message including first mobility information to a second UE through a first link for direct communication between UEs; periodically transmit a second message including second mobility information to the second UE through a second link for communication with a network; and receive information on a reception time difference between the first message and the second message from the second UE. Here, a transmission time of the second message may be adjusted based on the reception time difference exceeding a specific value.

Alternatively, there is provided a processing device configured to control a first UE including the processor(s) 102 and the memory(s) 104. The processing device includes: at least one processor; and at least one memory connected to the at least one processor and configured to store instructions that, based on execution by the at least one processor, cause the first UE to: periodically transmit a first message including first mobility information to a second UE through a first link for direct communication between UEs; periodically transmit a second message including second mobility information to the second UE through a second link for communication with a network; and receive information on a reception time difference between the first message and the second message from the second UE. Here, a transmission time of the second message may be adjusted based on the reception time difference exceeding a specific value.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 or a second UE may include the processor(s) 202 connected to the transceiver(s) 206 and the memory(s) 204. The memory(s) 204 may include at least one program capable of performing operations related to the embodiments described with reference to FIGS. 16 to 23.

For example, the processor(s) 202 may control the transceiver(s) 206 to: periodically receive a first message including first mobility information from a first UE through a first link for direct communication between UEs; periodically receive a second message of the first UE including second mobility information through a second link connected to a network; and calculate a reception time difference between the first message and the second message. Here, the reception time difference may be reported to the first UE to request adjustment of a transmission time of the second message.

Alternatively, there is provided a processing device configured to control a second UE including the processor(s) 202 and the memory(s) 204. The processing device includes: at least one processor; and at least one memory connected to the at least one processor and configured to store instructions that, based on execution by the at least one processor, cause the second UE to: periodically receive a first message including first mobility information from a first UE through a first link for direct communication between UEs; periodically receive a second message of the first UE including second mobility information through a second link connected to a network; and calculate a reception time difference between the first message and the second message. Here, the reception time difference may be reported to the first UE to request adjustment of a transmission time of the second message.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

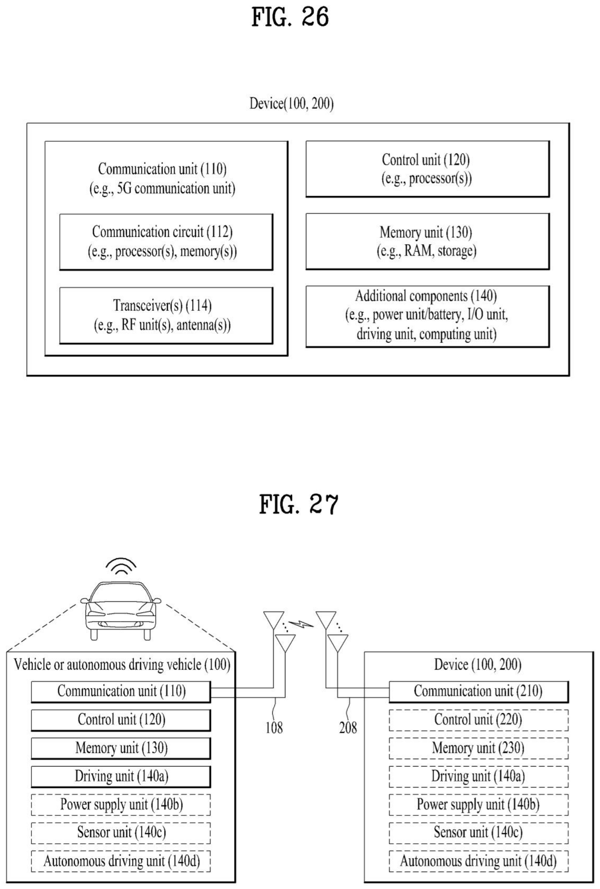

FIG. 26 illustrates another example of a wireless device applied to the present disclosure. The wireless device may be implemented in various forms according to a use-case/service (refer to FIG. 24)

Referring to FIG. 26, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 25. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 24), the vehicles (100b-1 and 100b-2 of FIG. 24), the XR device (100c of FIG. 24), the hand-held device (100d of FIG. 24), the home appliance (100e of FIG. 24), the IoT device (100f of FIG. 24), a digital broadcast terminal, a hologram device, a public safety device, an MTC device, a medicine device, a fintech device (or a finance device), a security device, a climate/environment device, the AI server/device (400 of FIG. 24), the BSs (200 of FIG. 24), a network node, etc. The wireless device may be used in a mobile or fixed place according to a use-example/service.

In FIG. 26, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 27 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 27, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1. A method of transmitting a message by a first User Equipment (UE) in a wireless communication system, the method comprising:

   periodically transmitting a first message comprising first mobility information to a second UE through a first link for direct communication between UEs;
   periodically transmitting a second message comprising second mobility information to the second UE through a second link for communication with a network; and
   receiving information on a reception time difference between the first message and the second message from the second UE,
   wherein a transmission time of the second message is adjusted based on the reception time difference exceeding a specific value.

2. The method of claim 1, wherein the transmission time of the second message is adjusted to be separated by an offset time from a transmission time of the first message, and
   wherein the offset time is determined based on the reception time difference.

3. The method of claim 2, wherein the first UE calculates a difference between reception delays of the first message and the second message based on the reception time difference, and
   wherein the first UE determines the offset time based on the calculated difference.

4. The method of claim 3, wherein the offset time is determined as a value obtained by subtracting the difference from a transmission period of the first message.

5. The method of claim 1, wherein the specific value is 0.

6. The method of claim 1, wherein the specific value is determined based on a time resource length of the second message.

7. The method of claim 1, wherein the information on the reception time difference is received based on the reception time difference exceeding the specific value.

8. A computer-readable recording medium having recorded thereon a program for executing the method of claim 1.

9. A first User Equipment (UE) configured to transmit a message in a wireless communication system, the first UE comprising:

   a Radio Frequency (RF) transceiver; and
   a processor connected to the RF transceiver,
   wherein the processor is configured to control the RF transceiver to:

   periodically transmit a first message comprising first mobility information to a second UE through a first link for direct communication between UEs;
   periodically transmit a second message comprising second mobility information to the second UE through a second link for communication with a network; and
   receive information on a reception time difference between the first message and the second message from the second UE,
   wherein a transmission time of the second message is adjusted based on the reception time difference exceeding a specific value.

10. A processing device configured to control a first User Equipment (UE) transmitting a message in a wireless communication system, the processing device comprising:

at least one processor; and
at least one memory connected to the at least one processor and configured to store instructions that, based on execution by the at least one processor, cause the first UE to:

periodically transmit a first message comprising first mobility information to a second UE through a first link for direct communication between UEs;
periodically transmit a second message comprising second mobility information to the second UE through a second link for communication with a network; and
receive information on a reception time difference between the first message and the second message from the second UE,
wherein a transmission time of the second message is adjusted based on the reception time difference exceeding a specific value.

11. A method of receiving a message by a second User Equipment (UE) in a wireless communication system, the method comprising:

periodically receiving a first message comprising first mobility information from a first UE through a first link for direct communication between UEs;
periodically receiving a second message of the first UE comprising second mobility information through a second link connected to a network; and
calculating a reception time difference between the first message and the second message,
wherein the reception time difference is reported to the first UE to request adjustment of a transmission time of the second message.

12. The method of claim 11, wherein the second UE calculates dynamics of the first UE based on a difference between the first mobility information and the second mobility information.

13. A computer-readable recording medium having recorded thereon a program for executing the method of claim 11.

14. A second User Equipment (UE) configured to receive a message in a wireless communication system, the second UE comprising:

a Radio Frequency (RF) transceiver; and
a processor connected to the RF transceiver,
wherein the processor is configured to control the RF transceiver to:

periodically receive a first message comprising first mobility information from a first UE through a first link for direct communication between UEs;
periodically receive a second message of the first UE comprising second mobility information through a second link connected to a network; and
calculate a reception time difference between the first message and the second message,
wherein the reception time difference is reported to the first UE to request adjustment of a transmission time of the second message.

15. A processing device configured to control a second User Equipment (UE) receiving a message in a wireless communication system, the processing device comprising:

at least one processor; and
at least one memory connected to the at least one processor and configured to store instructions that, based on execution by the at least one processor, cause the second UE to:

periodically receive a first message comprising first mobility information from a first UE through a first link for direct communication between UEs;
periodically receive a second message of the first UE comprising second mobility information through a second link connected to a network; and
calculate a reception time difference between the first message and the second message,

wherein the reception time difference is reported to the first UE to request adjustment of a transmission time of the second message.

FIG. 1

# FIG. 2

# FIG. 3

# FIG. 4

| ... | One Frame (10ms) | ... |

| ... | Half-Frame (5ms) | Half-Frame (5ms) | ... |

| ... | Subframe 0 (1ms) | ... | Subframe 4 (1ms) | Subframe 5 (1ms) | ... | Subframe 9 (1ms) | ... |

Subframe (1ms)

**15KHz** — Slot 0 (14symbols) — 1ms

**30KHz** — Slot 0 (14symbols) | Slot 1 — 500us

**60KHz** — Slot 0 (14symbols) | Slot 1 | Slot 2 | Slot 3 — 250us

**120KHz** — Slot 0 (14symbols) | Slot 1 | Slot 2 | Slot 3 | Slot 4 | Slot 5 | Slot 6 | Slot 7 — 125us

FIG. 5

FIG. 6

## FIG. 7

Wavelength

Radio | Microwave | Infrared | Visible | Ultraviolet | X-Ray | Gamma-Ray

$10^8$ m | 1m | 10mm | 1mm | 0.1mm | 700nm | 390nm | 10nm | 0.01nm

mmWave | Terahertz

Radiation Type

Frequency

3 Hz | 300 MHz | 30 GHz | 300 GHz | 3 THz | 430 THz | 730 THz | 30 PHz | 30 EHz

Mega: $10^6$ | Giga: $10^9$ | Tera: $10^{12}$ | Peta: $10^{15}$ | Exa: $10^{18}$

FIG. 8

FIG. 9

# FIG. 10

# FIG. 11

PU5-U

(a)

PU5-U

(b)

## FIG. 12

BS (e.g. eNB or gNB)

UE1          UE2

## FIG. 13

Frequency

| Unit #($N_F$-1) | Unit #($2N_F$-1) | | Unit #($N_F*N_T$-1) | Unit #($N_F$-1) |

Unit #1 | Unit #($N_F$+1) | Unit #($N_F*N_T-N_F$+1) | Unit #1

Unit #0 | Unit #$N_F$ | Unit #($N_F*N_T-N_F$) | Unit #0

Time

D2D signal transmission
from a UE allocated with unit #0

D2D signal transmission
from a UE allocated with unit #0

# FIG. 14

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

Carrier
Bandwidth

$N_{BWP, 2}^{start}$

$N_{BWP, 1}^{start}$

$N_{BWP, 0}^{start}$

CRB 0

Freq.

Time

PRB 0 (Point A) in the reference resource block

# FIG. 15

(a)                                                            (b)

## FIG. 16

## FIG. 17

# FIG. 18

Cellular antenna          PC5 (DSRC) antenna

511          521          531

| Latency measurer | Uu modem | PC5(DSRC) modem |

513          523          533

| Hybrid Device controller | V2N Stack | V2X Stack |

515          525

| Dynamics calculator | Application ECU |

527          537

| Sensor | Human Interface |

# FIG. 19

(a)

(b)

EP 4 742 706 A1

# FIG. 20

# FIG. 21

Y axis

$pos_{V2N}^{t3} = [x^{t3}, y^{t3}]$
$v_{V2N}^{t3}, \theta_{V2N}^{t3}$

$pos_{V2N}^{t1} = [x^{t1}, y^{t1}]$
$v_{V2N}^{t1}, \theta_{V2N}^{t1}$

$Diff_{V2N-V2N}^{t3-t1}$   $Diff_{V2N-V2X}^{t3-t2}$

$Diff_{V2N-V2X}^{t3-t2} = [\Delta \hat{x}^{t3}, \Delta \hat{y}^{t3}]$

Calculation time point

$pos_{V2X}^{t2} = [x^{t2}, y^{t2}]$
$v_{V2X}^{t2}, \theta_{V2X}^{te}$

$Diff_{V2N-V2N}^{t4-t1}$   $Diff_{V2X-V2X}^{t4-t2}$

$pos_{V2X}^{t4} = [x^{t4}, y^{t4}]$
$v_{V2X}^{t4}, \theta_{V2X}^{t4}$

X axis

EP 4 742 706 A1

EP 4 742 706 A1

## FIG. 22

**S221**

Periodically transmitting first message including first mobility information to second UE through first link for direct communication between UEs

↓

**S223**

Periodically transmitting second message including second mobility information to second UE through second link for communication with network

↓

**S225**

Receiving information on reception time difference between first message and second message from second UE

## FIG. 23

**S231**

Periodically receiving first message including first mobility information from first UE through first link for direct communication between UEs

↓

**S233**

Periodically receiving second message of first UE including second mobility information through second link connected to network

↓

**S235**

Calculating reception time difference between first message and second message

44

# FIG. 24

# FIG. 25

## FIG. 26

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

## FIG. 27

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
| --- |
| **PCT/KR2024/009260** |

### A. CLASSIFICATION OF SUBJECT MATTER

**H04W 4/40**(2018.01)i; **H04W 56/00**(2009.01)i; **H04W 88/06**(2009.01)i; **H04W 92/10**(2009.01)i; **H04W 92/18**(2009.01)i

According to International Patent Classification (IPC) or to both national classification and IPC

### B. FIELDS SEARCHED

Minimum documentation searched (classification system followed by classification symbols)

H04W 4/40(2018.01); H04W 28/02(2009.01); H04W 4/23(2018.01); H04W 72/02(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X, PC5, Uu, 시간차이(time difference), 조정(adjust)

### C. DOCUMENTS CONSIDERED TO BE RELEVANT

| Category* | Citation of document, with indication, where appropriate, of the relevant passages | Relevant to claim No. |
| --- | --- | --- |
| A | 3GPP; TSG SA; Architecture enhancements for V2X services (Release 17). 3GPP TS 23.285 V17.1.0 (June 2022). 15 June 2022.<br>See Annex C.3. | 1-15 |
| A | US 2020-0367030 A1 (LG ELECTRONICS INC.) 19 November 2020 (2020-11-19)<br>See paragraph [0172]; and claims 1-12. | 1-15 |
| A | US 2019-0182700 A1 (LG ELECTRONICS INC.) 13 June 2019 (2019-06-13)<br>See paragraphs [0062]-[0065]; and claims 1-17. | 1-15 |
| A | US 2023-0136170 A1 (VIVO MOBILE COMMUNICATION CO., LTD.) 04 May 2023 (2023-05-04)<br>See paragraphs [0140]-[0219]; and claims 1-20. | 1-15 |
| A | CN 111586624 B (RESEARCH INSTITUTE OF CHINA MOBILE COMMUNICATIONS CORPORATION et al.) 05 May 2023 (2023-05-05)<br>See paragraphs [0004]-[0084]; and claims 1-14. | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 October 2024** | **15 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/009260** |

| Patent document cited in search report | | | Publication date (day/month/year) | Patent family member(s) | | | Publication date (day/month/year) |
| --- | --- | --- | --- | --- | --- | --- | --- |
| US | 2020-0367030 | A1 | 19 November 2020 | EP | 3726861 | A1 | 21 October 2020 |
| | | | | EP | 3726861 | A4 | 26 May 2021 |
| | | | | EP | 3726861 | B1 | 14 June 2023 |
| | | | | US | 11317259 | B2 | 26 April 2022 |
| | | | | WO | 2019-117369 | A1 | 20 June 2019 |
| US | 2019-0182700 | A1 | 13 June 2019 | US | 11019520 | B2 | 25 May 2021 |
| | | | | WO | 2018-230866 | A1 | 20 December 2018 |
| US | 2023-0136170 | A1 | 04 May 2023 | CN | 111569879 | A | 25 August 2020 |
| | | | | CN | 111569879 | B | 17 January 2023 |
| | | | | CN | 111885255 | A | 03 November 2020 |
| | | | | CN | 113545110 | A | 22 October 2021 |
| | | | | CN | 113545110 | B | 11 November 2022 |
| | | | | CN | 113741127 | A | 03 December 2021 |
| | | | | CN | 113745439 | A | 03 December 2021 |
| | | | | CN | 113745439 | B | 18 April 2023 |
| | | | | CN | 113747359 | A | 03 December 2021 |
| | | | | CN | 113747359 | B | 18 July 2023 |
| | | | | CN | 113873378 | A | 31 December 2021 |
| | | | | CN | 113873378 | B | 10 March 2023 |
| | | | | CN | 113873465 | A | 31 December 2021 |
| | | | | CN | 212395198 | U | 26 January 2021 |
| | | | | EP | 3934265 | A1 | 05 January 2022 |
| | | | | EP | 4149168 | A1 | 15 March 2023 |
| | | | | EP | 4167590 | A1 | 19 April 2023 |
| | | | | EP | 4175384 | A1 | 03 May 2023 |
| | | | | JP | 2023-532078 | A | 26 July 2023 |
| | | | | JP | 2023-532743 | A | 31 July 2023 |
| | | | | KR | 10-2023-0029965 | A | 03 March 2023 |
| | | | | US | 11545598 | B2 | 03 January 2023 |
| | | | | US | 11623210 | B2 | 11 April 2023 |
| | | | | US | 11669297 | B2 | 06 June 2023 |
| | | | | US | 11956761 | B2 | 09 April 2024 |
| | | | | US | 2021-0376198 | A1 | 02 December 2021 |
| | | | | US | 2021-0405952 | A1 | 30 December 2021 |
| | | | | US | 2021-0405961 | A1 | 30 December 2021 |
| | | | | US | 2021-0410116 | A1 | 30 December 2021 |
| | | | | US | 2022-0251446 | A1 | 11 August 2022 |
| | | | | US | 2022-0305475 | A1 | 29 September 2022 |
| | | | | US | 2023-0134787 | A1 | 04 May 2023 |
| | | | | US | 2023-0180111 | A1 | 08 June 2023 |
| | | | | WO | 2021-238083 | A1 | 02 December 2021 |
| | | | | WO | 2021-238345 | A1 | 02 December 2021 |
| | | | | WO | 2021-238381 | A1 | 02 December 2021 |
| | | | | WO | 2021-238414 | A1 | 02 December 2021 |
| | | | | WO | 2021-238415 | A1 | 02 December 2021 |
| | | | | WO | 2021-238419 | A1 | 02 December 2021 |
| | | | | WO | 2021-238487 | A1 | 02 December 2021 |
| | | | | WO | 2022-001337 | A1 | 06 January 2022 |
| | | | | WO | 2022-001849 | A1 | 06 January 2022 |
| | | | | WO | 2022-001850 | A1 | 06 January 2022 |

Form PCT/ISA/210 (patent family annex) (July 2022)

## INTERNATIONAL SEARCH REPORT
### Information on patent family members

International application No.

**PCT/KR2024/009260**

| Patent document cited in search report | | Publication date (day/month/year) | Patent family member(s) | | | Publication date (day/month/year) |
|---|---|---|---|---|---|---|
| | | | WO | 2022-002166 | A1 | 06 January 2022 |
| CN | 111586624 B | 05 May 2023 | CN | 111586624 | A | 25 August 2020 |

Form PCT/ISA/210 (patent family annex) (July 2022)